# EUROPEAN PATENT SPECIFICATION

(11) **EP 2 132 993 B1**
(45) Date of publication and mention of the grant of the patent: **12.09.2012**
(21) Application number: 09162585.5
(22) Date of filing: 12.06.2009
(51) Int. Cl.: A23L 1/052, A23L 1/212, A23L 1/064, A23L 1/068, A23G 3/56

(54) **Chewable foodstuff based on at least one fruit or vegetable and production process thereof**
Kaubares Lebensmittel auf Grundlage von mindestens einer Frucht oder einem Gemüse und Herstellungsverfahren dafür
Aliment à mâcher à base d'au moins un fruit ou légume et son procédé de fabrication

(30) Priority: 13.06.2008 IT MI20081074
(43) Date of publication of application: 16.12.2009
(73) Proprietor: Magnoni, Giordano, 41100 Modena (IT); Luzzini, Marco, 43123 Parma (IT)
(72) Inventor: Taranto, Giuseppe Sergio, 16125 Genova (IT); Magnoni, Giordano, 41100 Modena (IT)
(74) Representative: Bottero, Carlo

(56) References cited:
- WO-A-96/29891
- DE-A1- 10 262 005
- DE-U1- 20 217 520
- JP-A- 11 146 761
- US-A- 3 367 783
- US-A- 4 205 093
- US-A- 5 385 747
- US-A- 5 554 406
- US-A1- 2007 128 332
- US-B1- 6 623 779

## Description

The present invention relates to a foodstuff based on at least one fruit or vegetable and to the production process thereof.

Recently, the lifestyles of the populations of economically advanced countries have been characterized by the so-called "fast food": Italian consumers, and even more European and American, consumers spend less and less time for preparing meals. For instance, the so-called "IV range vegetables" (i.e. fresh, raw vegetables, packaged, already peeled and washed, sometimes cut, so as to be ready for eating without further treatments) are winning increasing market shares despite their high cost, since they help to avoid annoying sorting and washing operations. Even for first courses, which are the pride of Italian cooking, ready-to-serve products that need only being warmed up are growing more and more.

This trend is very evident in snacks to be eaten out of main meals: the traditional afternoon snack for children in the Fifties, i.e. bread and jam, has practically disappeared since it is inconvenient to prepare and eat, filled with a sticky, colored product with which hands easily get dirty and clothes stained. This snack has been replaced by so-called "ready-to-eat snacks", which do not need time for preparation, are quite convenient to eat without risks of getting dirty, and are much appreciated by children since they are tasty and attractive.

Recently, especially concerning children's food out of main meals, there is an increasing awareness that this kind of food is questionable from a nutritional point of view, so that possible alternatives for restoring healthiness while maintaining convenience of use have begun to be taken into consideration. As a matter of fact, snacks that are currently available on the market are regarded as too caloric, so that they certainly represent one of the factors promoting children's obesity, and furthermore they clearly compromise dental care still because of the high sugar content, which as is known causes an excess of bacterial proliferation in the oral cavity.

The Applicants have therefore faced the problem of providing a foodstuff that is particularly suitable for eating outside main meals, which combines convenience of use, a good nutritional profile and a good tastiness and attractiveness. This foodstuff should further ensure a long shelf-life, so that it can compete with snacks that are currently on the market. As is known, these snacks can be stored for a long time thanks to the low water content and/or to the addition of preservatives and/or to the very high sugar content (generally above 70% by weight) for example as described in US 554406.

These objectives are not achieved by products that are currently available on the market, such as for instance solid snacks based on cereals and fruit for example WO96/29891, which are convenient for eating but have questionable nutritional values, or solid snacks based on fruit only, which have questionable nutritional values due to the caloric intake caused by the high sugar content or fruit jelly products which have a limited content of sugar but are not shelf stable (because they contain agar which tends to degrade at acid pH) and do not have a high nutritional value (because they contain palatinose as main ingredient, for example as described in DE 10262005). Available on the market are also thickened preparations based on fruit with correct nutritional values, such as low-sugar jams & spreads for example as described in US2007/0128332, but they have such a consistence to be spread and not to be "self-sustaining", so that they cannot either be applied onto a stick or other support or be taken out of a container keeping a predefined shape.

The Applicants have now found a foodstuff based on fruit which meets the aforesaid requirements and can be manufactured on an industrial scale with a pasteurization process, ensuring a long shelf-life without the addition of preservatives and with a low sugar content.

According to a first aspect, the present invention therefore relates to a foodstuff obtained by pasteurization with hot filling technology of a liquid or semi-solid based on at least one fruit or vegetable, containing an amount of simple sugars from 10-40% by weight and comprising a thickening agent chosen among pectins, carob flour and tara gum in such an amount to make the foodstuff chewable and self-sustaining the foodstuff having such a consistence that, when subjected to a compression test using a TAXT2 dynamometer equipped with a 25 kg load cell SMSP/100, driven at a constant speed of 1mm/sec against a product sample (in the form of a cube with a 10 mm side), it has the following characteristics:
maximum compression force (Fₘₐₓ: not lower than 110g;
first compression gradient (G₀): not lower than 35g/sec;
area FT-1 (A_{FT-1}): not lower than 90 g*sec.

Preferably, the foodstuff according to the present invention has a caloric content not above 816 Kjoules/100 g, preferably of 325 to 490 Kjoules/100 g. In a second aspect, the present invention relates to a process for producing a foodstuff as described above, including the following steps:
preparing a liquid or semi-solid based on at least one fruit or vegetable;
heating said liquid or semi-solid to a temperature of 80°C to 105°C;
adding and mixing said heated liquid or semi-solid with at least one thickening agent;
keeping the mixture thus obtained at such a temperature and for such a time to obtain the pasteurization thereof with hot filling technology.

Products obtained from the primary transformation of vegetables, in particular fruit and/or vegetables, can be used as liquids or semi-solids based on at least one fruit or vegetable, which can be e.g. in the form of purees, juices, concentrates, extracts. The starting vegetable can be selected from a wide range, mainly depending on the type of end consumer. By way of mere example, the following can be listed:
fruit, in particular, besides common fruits such as peach, apricot, pear, blueberries, tropical fruits, etc., fruit with antioxidant properties, such as the so-called "red fruits", açai, acerola, and the like; vegetables, e.g. carrot or tomato.

During vegetable processing with known techniques, the product is not added with any preservative, whereas small amounts of sugars can be added, however so as to keep the sugar content between 10-40% by weight.

The liquid or semi-solid based on at least one fruit or vegetable according to the present invention can be added with other ingredients so as to modify or enrich the taste thereof, such as e.g.: extracts of tea or ginseng; spices; milk or milk derivatives; acidity regulators; natural flavorings; vitamins; mineral salts; fibers; antioxidants; colorants, preferably of natural origin; etc. Thanks to the pasteurization process, the foodstuff according to the present invention does not require the addition of preservatives and can be stored in a sealed container at room temperature for a time indicatively ranging from 4 to 12 months depending on the variety and amount of fruit, on the recipe in general and on the type of packaging. The liquid or semi-solid based on at least one vegetable according to the present invention can be further added with solid insoluble ingredients, e.g. fruit pieces, cereals, so as to further enrich the end product.

The foodstuff according to the present invention is **characterized in that** it is chewable and self-sustaining, e.g. by being applied onto a stick or other support without breaking or falling, or by being taken out of a container keeping a predefined shape so as to be convenient for eating. This characteristic is related to the consistence of the product, which can be evaluated with a compression test using a piston dynamometer (e.g. a TAXT2 dynamometer, manufactured by Stable Micro Systems, equipped with a 25 kg load cell SMSP/100). The piston is driven at a constant speed of 1 mm/sec against a product sample (in the form of a cube with a 10 mm side), then the applied compression force is measured as a function of time.

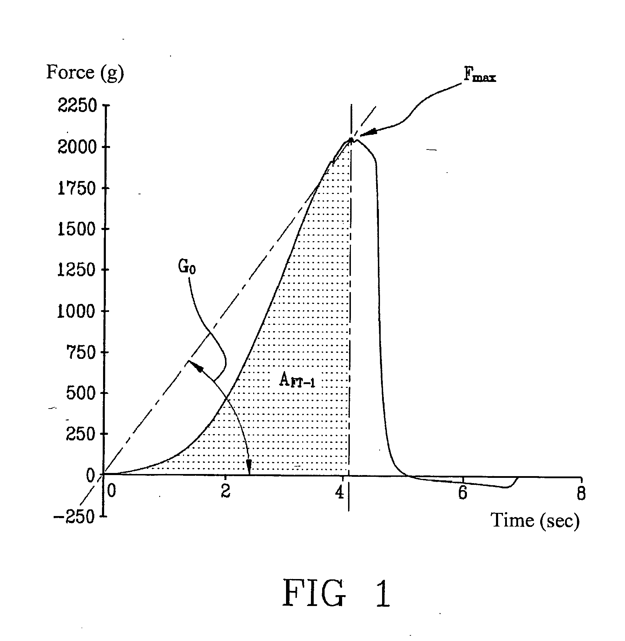

A typical diagram of the applied force as a function of time, measured on a foodstuff sample according to the invention, is shown in Figure 1.

The foodstuff according to the present invention preferably has the following characteristics:
- maximum compression force (Fₘₐₓ): not lower than 100 g;
- first compression gradient (Go): not lower than 35 g/sec;
- area FT-1 (A_{FT-1}): not lower than 90 g*sec;
wherein:
Fₘₐₓ is the maximum force measured between the beginning of compression and the point where the product yields to compression and gets squeezed;
Go is the slope of the straight line between the diagram point at zero time and the diagram point corresponding to Fₘₐₓ;
A_{FT-1} is the area underlying the diagram between zero time and the time corresponding to Fₘₐₓ.

Preferably, the foodstuff according to the present invention has a pH value ranging from 2.0 to 4.6. This characteristic enables to treat the product with hot filling technology.

Preferably, the foodstuff according to the present invention has a fruit or vegetable content corresponding to an amount of fresh starting fruit or vegetable of 10 to 500, more preferably of 50 to 300 grams per 100 grams of finished product.

As far as the production process is concerned, the step of preparing the liquid or semi-solid based on at least one fruit or vegetable can be performed with known methods, e.g.: (i) by pressing; or (ii) by peeling, pitting or coring, followed by sieving (i.e. passing through screens with suitably sized holes depending on the type of product used, generally ranging from 5 to 0.2 mm); or (iii) by cutting into pieces. This preparation can also include at least one de-aeration step, so as to remove air that may have been trapped when treating the vegetable. A further additional step can be homogenization, so as to make the product more uniform.

As far as the addition of the thickener is concerned, this can be first dissolved or dispersed in an aqueous medium or added directly to the liquid or semi-solid obtained as described above.

The pasteurization step can be performed with procedures that are well known in the art depending on the type of product treated, as indicated in the so-called "Good Manufacturing Practices".

The pasteurization of the foodstuff according to the present invention is preferably performed in the same container designed for shipping and selling said foodstuff. An example of a particularly suitable container is described in the international patent application WO 2006/126046. That container includes a pocket having at least one opening into which a stick can be introduced, so as to ensure the hermetic condition of the pocket. This stick is partly inserted into said pocket and partly extends outside, so as to act as a support for the chewable foodstuff according to the present invention and to enable an easy consumption thereof after removing the wrapping forming said pocket.

As an alternative, the foodstuff according to the present invention can be inserted into a tubular container made of a semi-flexible material. An end of the container is closed, the foodstuff is inserted and sealed. Once the seal is removed, the consumer can take out and gradually eat the foodstuff by simply pressing his/her fingers onto the closed end of the container.

Further characteristics and advantages of the present invention will appear more evident from the indicative, non-limiting description of an example of embodiment as disclosed below.

A foodstuff according to the present invention was prepared using:

| | | |
|---|---|---|
| fruit puree or juice: | 77% | by weight; |
| added sugar: | 20% | by weight; |
| thickeners: | 2% | by weight; |
| citric acid: | 1% | by weight. |

The fruit puree or juice was introduced into a heating tank, where it was pre-heated up to 95°C. Then the thickeners (2% by weight) were added under stirring (speed of stirrer impeller above 500 rpm). The mixture was then added - still under stirring - with sugar and fruit sugars (20% by weight), continuing heating so as to keep temperature above 90°C. Then citric acid (1% by weight) was added.

The product thus obtained was introduced into suitable plastic containers at a temperature not below 90°C (hot filling). The containers were then sealed, e.g. by heat sealing. The product was kept at a temperature of about 95°C for 5-10 minutes, depending on the type and size of the package, so as to obtain pasteurization.

Then the containers were cooled (with water, alternatively by air cooling) up to an end temperature of 33 to 40°C. The containers thus filled can then undergo the subsequent steps that are commonly used for food packaging, in particular: drying, control of level and presence of cap and label, packaging, control of finished product, up to secondary packaging (in boxes, displays, clusters and the like).

## Claims

1. A foodstuff obtained by pasteurization with hot filling technology of a liquid or semi-solid based on at least one fruit or vegetable, containing an amount of simple sugars from 10 to 40% by weight, and comprising a thickening agent chosen among pectins, carob flour and tara gum in such an amount to make the foodstuff chewable and selfsustaining, the foodstuff having such a consistence that, when subjected to a compression test using a TAXT2 dynamometer equipped with a 25 Kg load cell SMSP/100, driven at a constant speed of 1 mm/sec against a product sample (in the form of a cube with a 10 mm side), it has the following characteristics:
maximum compression force (Fₘₐₓ): not lower than 100 g;
first compression gradient (G₀): not lower than 35 g/sec;
area FT-1 (A_{FT-1})): not lower than 90 g*sec.

2. The foodstuff according to any one of the preceding claims, said foodstuff being preservative-free.

3. The foodstuff according to any one of the preceding claims, wherein said at least one fruit or vegetable is obtained from the primary transformation of fruits and/or vegetables, and is in the form of puree, juice, concentrate or extract.

4. The foodstuff according to any one of the preceding claims, said foodstuff having a caloric content not above 816 Kjoules/100 g, preferably ranging from 325 to 490 Kjoules/100 g.

5. The foodstuff according to any one of the preceding claims, having a pH value of 2.0 to 4.6.

6. The foodstuff according to any one of the preceding claims, having a fruit or vegetable content corresponding to an amount of fresh starting vegetable or fruit of 10 to 500, preferably of 50 to 300, grams per 100 grams of finished product.

7. The foodstuff according to any one of the preceding claims, said foodstuff being inserted into a container comprising a support to which the foodstuff sticks after removing said container.

8. The foodstuff according to any one of the claims 1 to 7, wherein said foodstuff is inserted into a tubular container made of semi-flexible material, from which the foodstuff can be gradually taken out of an open end of said container by pressing the opposite end of said container.

9. A process for producing a foodstuff according to any one of the preceding claims, including the following steps:
preparing a liquid or semi-solid based on at least one fruit or vegetable;
heating said liquid or semi-solid to a temperature of 80°C to 105°C;
adding and mixing said heated liquid or semi-solid with at least one thickening agent;
keeping the mixture thus obtained at such a temperature and for such a time to obtain the pasteurization thereof with hot filling technology.

10. The process according to claim 9, further including at least one de-aeration step, so as to remove air that may have been trapped during fruit treatment.

11. The process according to claim 9 or 10, further including a homogenization step.

12. The process according to any one of the claims 9 to 11, wherein said at least one thickener is first dissolved or dispersed in an aqueous medium.

13. The process according to any one of the claims 9 to 12, wherein said at least one thickener is added directly to the liquid or semi-solid.

14. The process according to any one of the claims 9 to 13, wherein the pasteurization step is performed in the same container intended for shipping and selling said foodstuff.

## Patentansprüche

1. Lebensmittel, erhalten durch Pasteurisierung mit der Technologie der Heißabfüllung einer Flüssigkeit oder eines halbfesten Stoffs auf Grundlage von mindestens einer Frucht oder einem Gemüse, enthaltend eine Menge Einfachzucker von 10 bis 40 Gew.-%, und umfassend ein Verdickungsmittel, ausgewählt unter Pektinen, Johannisbrotkernmehl und Tarakernmehl in solch einer Menge, dass das Lebensmittel kaubar und selbsterhaltend wird, wobei das Lebensmittel solch eine Konsistenz aufweist, dass es beim Unterziehen eines Kompressionstests unter Verwendung eines mit einer 25-kg-Wägezelle SMSP/100 ausgestatteten TAXT2-Dynamometers, das bei einer konstanten Geschwindigkeit von 1 mm/s gegen eine Produktprobe (in Form eines Würfels mit einer 10 mm langen Seite) angetrieben wird, die folgenden Eigenschaften aufweist:
maximale Druckkraft (Fₘₐₓ): nicht geringer als 100 g;
erster Druckgradient (G₀): nicht geringer als 35 g/s;
Bereich FT-1 (A_{FT-1}): nicht geringer als 90 g*s.

2. Lebensmittel nach einem der vorangehenden Ansprüche, wobei das Lebensmittel frei von Konservierungsmitteln ist.

3. Lebensmittel nach einem der vorangehenden Ansprüche, wobei die mindestens eine Frucht oder Gemüse aus der Primärumwandlung von Früchten und/oder Gemüse erhalten wird und in Form von Püree, Saft, Konzentrat oder Extrakt vorliegt.

4. Lebensmittel nach einem der vorangehenden Ansprüche, wobei das Lebensmittel einen Kaloriengehalt von nicht über 816 kJoules/100 g aufweist, vorzugsweise von 325 bis 490 kJoules/100g.

5. Lebensmittel nach einem der vorangehenden Ansprüche, aufweisend einen pH-Wert von 2,0 bis 4,6.

6. Lebensmittel nach einem der vorangehenden Ansprüche, aufweisend einen Frucht- oder Gemüsegehalt, der einer Menge eines frischen Ausgangsgemüses oder -frucht von 10 bis 500, vorzugsweise 50 bis 300 Gramm pro 100 Gramm Fertigprodukt entspricht.

7. Lebensmittel nach einem der vorangehenden Ansprüche, wobei das Lebensmittel in einen Behälter eingeführt ist, umfassend einen Träger, an dem das Lebensmittel nach dem Entfernen des Behälters anhaftet.

8. Lebensmittel nach einem der Ansprüche 1 bis 7, wobei das Lebensmittel in einen rohrförmigen Behälter aus einem halbflexiblen Material eingeführt ist, aus dem das Lebensmittel nach und nach aus einem offenen Ende des Behälters durch Drücken des gegenüberliegenden Endes des Behälters herausgenommen werden kann.

9. Verfahren zur Produktion eines Lebensmittels nach einem der vorangehenden Ansprüche, einschließend die folgenden Schritte:
Herstellung einer Flüssigkeit oder eines halbfesten Stoffs auf der Grundlage von mindestens einer Frucht oder einem Gemüse;
Erhitzen der Flüssigkeit oder des halbfesten Stoffs auf eine Temperatur von 80 °C bis 105 °C;
Hinzufügen und Mischen der erhitzten Flüssigkeit oder des halbfesten Stoffs mit mindestens einem Verdickungsmittel;
Halten der so erhaltenen Mischung bei solch einer Temperatur und solch einer Zeit, dass ihre Pasteurisierung mit Heißabfüllungstechnologie erhalten wird.

10. Verfahren nach Anspruch 9, ferner einschließend mindestens einen Entlüftungsschritt zur Entfernung von Luft, die während der Behandlung der Frucht eingeschlossen worden sein könnte.

11. Verfahren nach Anspruch 9 oder 10, ferner einschließend einen Schritt der Homogenisierung.

12. Verfahren nach einem der Ansprüche 9 bis 11, wobei das mindestens eine Verdickungsmittel zuerst in einem wässrigen Medium aufgelöst oder dispergiert wird.

13. Verfahren nach einem der Ansprüche 9 bis 12, wobei das mindestens eine Verdickungsmittel direkt zur Flüssigkeit oder zum halbfesten Stoff hinzugefügt wird.

14. Verfahren nach einem der Ansprüche 9 bis 13, wobei der Schritt der Pasteurisierung im selben Behälter ausgeführt wird, der für den Transport und Verkauf des Lebensmittels vorgesehen ist.

## Revendications

1. Aliment obtenu par pasteurisation et par une technologie de remplissage à chaud d'un liquide ou d'un semi-solide à base d'au moins un fruit ou un légume, contenant une quantité de monosaccharide comprise entre 10 et 40 % en poids, et comprenant un agent épaississant choisi parmi des pectines, de la farine de caroube et de la gomme de tara en quantité suffisante pour que l'aliment puisse être mâché et avoir une consistance compacte, l'aliment ayant une consistance telle que, lorsqu'il est soumis à un essai de compression utilisant un dynamomètre TA-XT2 équipé d'une cellule de charge de 25 Kg SMSP/100, entraîné à une vitesse constante d'1 mm/sec contre un échantillon de produit (ayant la forme d'un cube de 10 mm de côté), a les caractéristiques suivantes :
Force de compression maximale (Fₘₐₓ) : non inférieure à 100 g ;
premier gradient de compression (G₀) : non inférieure à 35 g/sec ;
zone FT-1 (A_{FT-1}) : non inférieure à 90 g*sec.

2. Aliment selon l'une quelconque des revendications précédentes, ledit aliment étant sans conservateur.

3. Aliment selon l'une quelconque des revendications précédentes, dans lequel ledit au moins un fruit ou légume est obtenu à partir d'une transformation primaire de fruits et/ou de légumes et se présente sous forme de purée, jus, concentré ou extrait.

4. Aliment selon l'une quelconque des revendications précédentes, ledit aliment ayant une quantité calorique non supérieure à 816 Kjoules/100 g, de préférence comprise entre 325 et 490 Kjoules/100 g.

5. Aliment selon l'une quelconque des revendications précédentes, ayant un pH compris entre 2,0 et 4,6.

6. Aliment selon l'une quelconque des revendications précédentes, ayant un contenu de fruit ou de légume correspondant à une quantité de départ de légumes ou de fruits frais comprise entre 10 et 500, de préférence entre 50 et 300 grammes pour 100 grammes de produit fini.

7. Aliment selon l'une quelconque des revendications précédentes, ledit aliment étant inséré dans un contenant comprenant un support auquel l'aliment reste attaché après avoir retiré ledit contenant.

8. Aliment selon l'une des revendications de 1 à 7, dans lequel ledit aliment est inséré dans un contenant tubulaire en matière semi-flexible, duquel l'aliment peut en être sorti graduellement à travers une extrémité ouverte dudit contenant en pressant l'extrémité opposée dudit contenant.

9. Procédé de fabrication d'un aliment selon l'une quelconque des revendications précédentes, incluant les étapes suivantes :
préparation d'un liquide ou d'un semi-solide à base d'au moins un fruit ou d'un légume ;
réchauffement dudit liquide ou semi-solide à une température comprise entre 80 °C et 105 °C ;
ajout et mélange dudit liquide ou semi-solide réchauffé à au moins un épaississant ;
conservation du mélange ainsi obtenu à une température donnée et pour une certaine durée de sorte à obtenir la pasteurisation de celui-ci par le biais d'une technologie de remplissage à chaud.

10. Procédé selon la revendication 9, incluant de plus au moins une étape de désaération, de sorte à retirer l'air qui aurait pu être piégé lors du traitement du fruit.

11. Procédé selon les revendications 9 ou 10, incluant de plus une étape d'homogénéisation.

12. Procédé selon l'une quelconque des revendications de 9 à 11, dans lequel ledit au moins un épaississant est d'abord dissous ou dispersé dans un milieu aqueux.

13. Procédé selon l'une quelconque des revendications de 9 à 12, dans lequel ledit au moins un épaississant est ajouté directement au liquide ou au semi-solide.

14. Procédé selon l'une quelconque des revendications de 9 à 13, dans lequel l'étape de pasteurisation est réalisée dans le même contenant prévu pour expédier et vendre ledit aliment.
